# EUROPEAN PATENT APPLICATION

(11) **EP 1 137 264 A2**
(43) Date of publication of application: **26.09.2001**
(21) Application number: 01850051.2
(22) Date of filing: 22.03.2001
(51) Int. Cl.: H04N 5/00

(54) **Communication method, a network and a terminal using said method**

(30) Priority: 22.03.2000 SE 0000987
(71) Applicant: Nokia Corporation, 02150 Espoo (FI)
(72) Inventor: Kalhour, Morteza, 583 31 Linköping (SE)
(74) Representative: Estreen, Lars

(57) **Abstract**

A method and a communication network are provided for supplying a receiver, such as a Set Top Box connected to the network, with tuning information for services provided on the network. A database is compiled comprising a plurality of service identifiers (SI) identifying the provided services and a plurality of sets of tuning parameters (TP). Each of the sets is associated with a respective one of said plurality of service identifiers. Tuning parameters for a requested service are retrieved by accessing said database through one of said plurality of service identifiers and using said retrieved tuning parameters for tuning said receiver. The method and the network provide a flexible way of supplying information. A subscriber terminal and a computer program product are also provided.

## Description

### FIELD OF INVENTION

The present invention generally relates to a method and a system for providing a user of a communication system with information regarding provided services. More specifically, the invention relates to a method and a system for providing a subscriber of audio/video services with relevant tuning parameters.

### BACKGROUND

Many magazines, newspapers, and other publications have built their readership around the growing market of television (TV) viewers, who desire TV programme information. Many cable TV networks have even designated a TV channel for providing the date, time, and channel, at which TV programmes will be presented. These conventional sources of TV programme information are only useful if the user knows the tuning parameters of his/her receiver system, e.g. a TV set, for the requested service, such as a TV programme.

Historically, the services provided have been analogue services. For such services, the information is rather easy to comprehend and use when tuning the receiver. In analogue TV services, for example, each channel is associated with a frequency in a frequency band, which is easy to tune to.

However, today more and more digital services appear on the market, such as digital television. A problem in this respect is the complex information involved with digital tuning, which is almost impossible for a normal user to understand and use.

Thus, tuning to a digital service is effected in an entirely different way than for analogue services. For a digital service, the service provider sends digital information regarding the service provided to a digital receiver located at the user, such as a Set Top Box (STB). The receiver uses this information in order to tune to or receive these services. The information comprises a number of complex parameters, such as frequency, forward error correction (FEC), symbol rate, packet identifier (PID) for audio and video etc.

The tuning information for digital services is always sent together with the services themselves. This should in fact make it easier for the user to tune to these services compared to analogue services. Normally, when setting up a STB, the user initiates an automatic search, which finds and stores all the available services available to the user. However, this is a time-consuming process, especially if the user has access to more than one network. Furthermore, the search sometimes misses a channel, in which case that particular channel will be unavailable.

As already mentioned, a user can have access to more than one service provider network. Examples of such networks are satellite, cable and terrestrial networks. Thus, different users can have access to different networks. This means that different tuning parameters for different types of tuners are used by different users watching for example the same TV programme. This poses a special problem for those providing information regarding TV channels because the information needed is different for different users.

### OBJECT OF THE INVENTION

An object of the present invention is to overcome the problems of prior art and to provide means for facilitating tuning to digital information services provided by service providers in a digital information system.

### SUMMARY OF THE INVENTION

The invention is based on the realisation, that identification regarding service name and tuning information associated with the service in question can be stored separated from but associated with each other.

Thus, according to one aspect of the invention there is provided a method as defined in claim 1. According to a second aspect there is provided a communication network as defined in claim 12. According to a third aspect there is provided a subscriber terminal as defined in claim 22. According to a fourth aspect there is provided a computer program product as defined in claim 32.

With the method, network, terminal and computer program product according to the invention, the above mentioned problems in connection with tuning are solved or at least mitigated. More specifically, with the method and the network according to the invention, a terminal of a user can tune to a particular service based only on the supply of a service name. This means that any one, not only the service provider, can initiate tuning to a particular service as long as the service name is known.

### BRIEF DESCRIPTION OF DRAWINGS

The invention is now described, by way of example, with reference to the accompanying drawings, in which:
Fig. 1 is an overview of an information system embodying the invention;
Fig. 2 shows a user equipment used in a communication device comprising a Service Name Server (SNS) according to the invention;
Fig. 3 shows the Service Name Server in more detail;
Fig. 4 shows the connection between the Service Name Server, a browser and a tuner module; and
Fig. 5 shows an alternative placement of an SNS according to the invention.

### DETAILED DESCRIPTION OF THE INVENTION

In the following, preferred embodiments of the invention will be described.

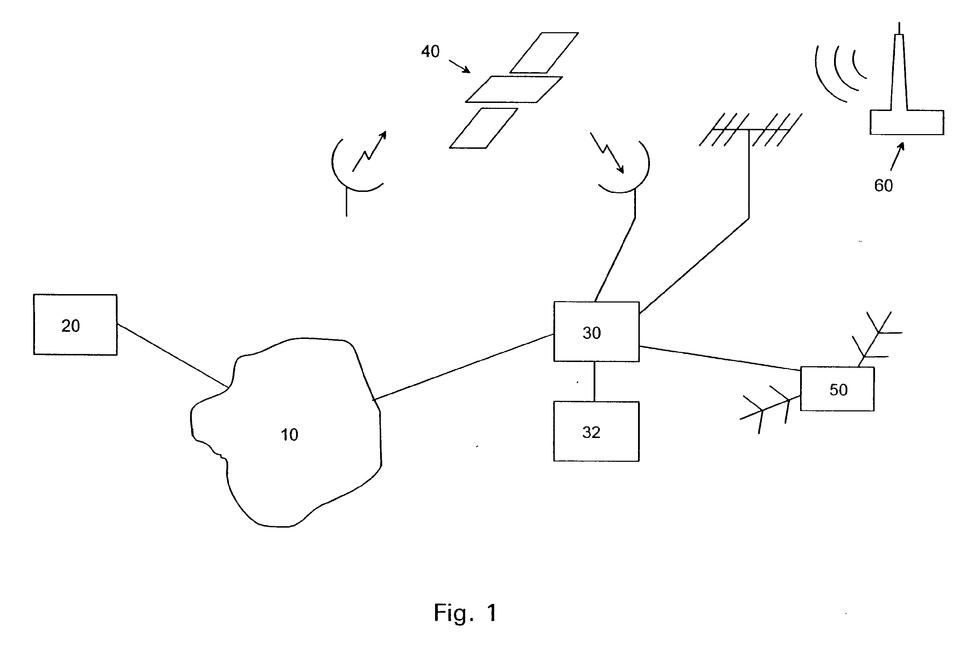

In figure 1, an overview of an information system is shown. The system is built around several networks, one of which is a data network, generally designated 10, such as the Internet. Different service providers, such as TV companies, are connected to this network through respective service provider equipment, one of which 20 is shown in figure 1. Users subscribing on the services are also connected to the network 10 through respective user equipment, one of which 30 is shown in figure 1.

The user equipment 30 can be any of a personal computer with an associated modem, a separate display unit, an integrated receiver decoder (IRD) in the form of a monitor accompanying a so-called Set Top Box (STB) etc. In the following an STB 30 connected to a TV set 32 will be used as an example. Thus, the requested services are in this case displayed on the TV set.

In addition to the data network 10, there is a satellite network, generally designated 40, a cable channel network 50 and a terrestrial network 60. Thus, the services provided by the service providers 20 can be delivered in many different ways. As an example, a digital television channel can be transmitted to a user by satellite, by a cable channel network, by a terrestrial network or even a data network, such as the Internet.

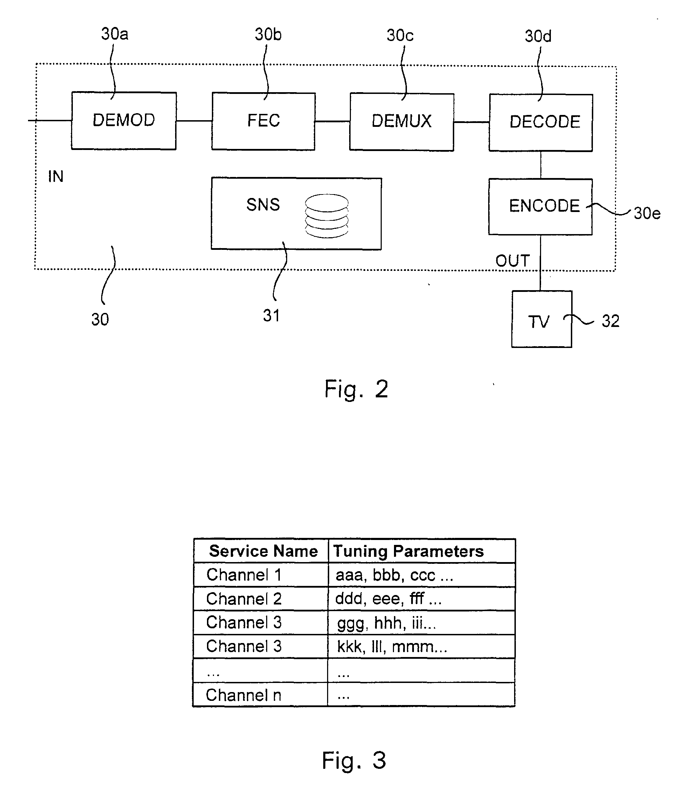

The user equipment comprising the STB 30 and the TV set 32 will now be described with reference to figure 2. The STB, generally designated 30, is used for converting information received through input IN into useful information. Thus, STB 30 comprises a serially connected demodulator (DEMOD) 30a, a forward error correction unit (FEC) 30b, a demultiplexer (DEMUX) 30c, a decoder 30d and a source encoder (ENCODE) 30e. The encoded information signal output by the encoder 30d through output OUT is supplied to the TV set 32. In order to function correctly, the different parts of the STB must be informed of the parameters necessary to display the requested service on the TV set 32.

To facilitate tuning, the STB 30 comprises a software application, which in the following will be called "Service Name Server" (SNS) 31. As shown in fig. 2, it is a server, i.e., in programming terms, an application that resides in the STB 30 and provides tuning information to other parts of the software system on request. The SNS is provided with a proper interface to the user equipment (not illustrated).

The SNS application can be downloaded as an independent application in the STB. The installation program and the data are then grouped together and sent to the STB as one self-installing packet. Alternatively, the SNS application comes with the STB at delivery.

The SNS database will now be described in more detail with reference to figure 3. It essentially contains two different but associated kinds of information, namely Service Names (SN) and Tuning Parameters (TP). The service names can take any suitable form as long as they in a convenient way describe the service in question. In connection with TV, the services are normally called "channels". In the example given herein, the services are thus named "Channel 1", Channel 2" etc up to "Channel n", wherein n is the total number of channels available to the user. However, the Service Names can take any suitable form.

The Service Names are associated with respective Tuning Parameters comprising information sufficient for the STB to tune to the requested service in that specific network. Thus, the parameters can be frequency, forward error correction (FEC), symbol rate, packet identifier (PID) for audio and video etc.

The Service Names and the Tuning Parameters are collected in the SNS database, schematically shown in figure 3. In a preferred embodiment, the SNS database resides in the STB.

The building up of an SNS database can be effected in one of several ways. The simplest but least efficient way is to have the receiver make a channel search, as is conventional in e.g. a DVB system (DVB - Digital Video Broadcasting, a standard for transmission of multimedia services). A software module is then arranged in the STB to retrieve tuning information from the stream of incoming information. Thus the module first collects and filters the relevant information and this information is supplied to the SNS, which then builds up an internal database based on this information. However, this is associated with several drawbacks, as already has been explained.

A more preferred method is to have a service provider or a third party compile the SNS database, which is then downloaded as a file to the STB. In that way, the user is never involved in the building of the SNS database. The downloaded file then contains information either regarding services from one single service provider or from several or even all providers used by the user. Thus, the information is supplied either as one single packet or divided into several different packages.

Building or updating of the SNS database can be initiated by the user or can be effected automatically. Thus, when the user adds services to the service subscription, an SNS update can be commanded through the STB interface. As an example, if the user selects an "Update SNS table" option, an SNS file is downloaded from the home page of the provider, replacing the old SNS file installed in the STB. The function can be built into the STB by using different types of files, e.g. MIME types, by giving the SNS file a predetermined extension. When an SNS file having the SNS extension is downloaded, the SNS application is automatically launched and the old information is replaced by new information that is automatically installed to the correct position in the STB.

However, the usual information and installation procedures used by the provider are normally used and the updating takes place automatically. An updating application in the STB can then be monitoring a particular position in the incoming information stream during a specific time interval, e.g. during night-time when bandwidth is cheap.

Yet an alternative way of effecting the updating is to notify the user of the fact that new information is available by using the function incorporated into the ATVEF standard (ATVEF - Advanced Television Enhancement Forum). According to ATVEF, it is possible, in a digital network, to send URLs to the STB. By using UHTTP (Unidirectional Hypertext Transfer Protocol - a simple, robust, one-way resource transfer protocol that is designed to efficiently deliver resource data in a one-way broadcast-only environment), the web page is sent to the STB and e.g. an icon is displayed to the user. The SNS information is then "pushed" to the STB by means of UHTTP, preferably in the form of an HTML file.

As already stated, many receivers, e.g. digital satellite receivers, are connected to different service provider networks. It can then be that the same service, e.g. a specific TV channel, is accessible to a user through different networks, e.g., a satellite network 40 and a terrestrial network 60, see figure 1. This means that there will be several entries for the same service name in the SNS database. Thus, in the example shown in figure 3, there are two entries for Channel 3.

The method of resolving this ambiguity is an implementation issue. In a preferred embodiment, the SNS is informed by the STB about to which network the receiver is currently connected. If the service in question is accessible through this network, that entry of the SNS database is used. In that way unnecessary network changes are prevented, saving time. However, if the current network does not provide the requested service, another network must be tuned to. In the preferred embodiment of the SNS database, there is always a preferred entry depending on the current network.

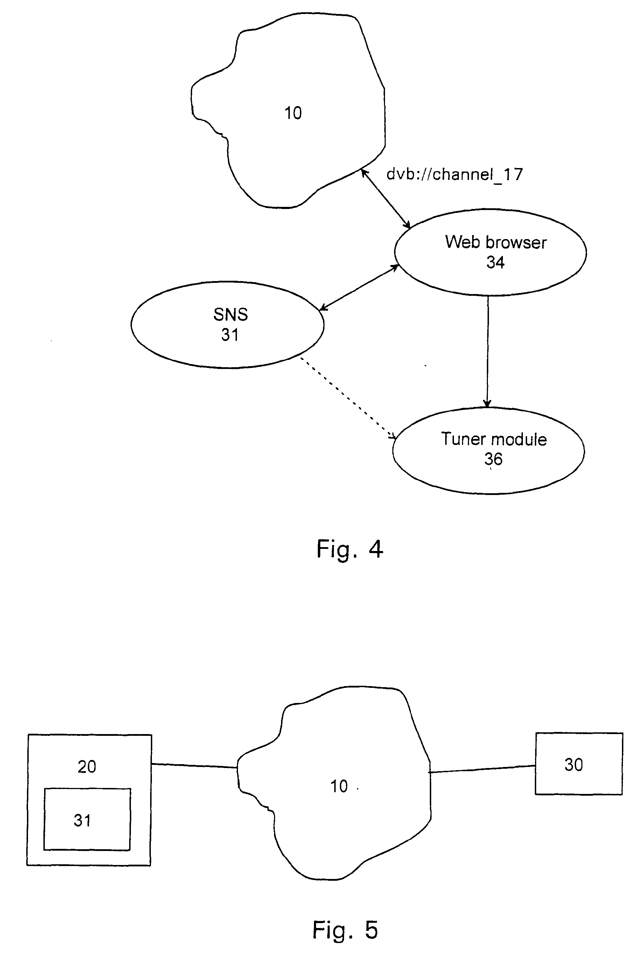

After the SNS database has been built, the SNS is ready for use by other software modules for providing them with tuning parameters of the different services. An example of that will now be described with reference to figure 4. A web browser 34 is provided in the STB 30 together with the SNS application 31 and a tuner module 36. The STB is connected to the Internet 10, thus enabling browsing of the Internet. In the present example, the user is accessing a web site with a TV guide having links to the different TV programmes available for example this week. Thus there is displayed a list of programmes available to the user. Associated with each displayed entry is a so-called "Service URI" which is present in web pages. The Service URIs used in the example have the format "dvb://...", indicating that they relate to digital video broadcasting. However, the exact format of the Service URIs is outside the scope of the present invention and will not be discussed further herein.

The user in the example wants to watch the television channel "Channel 17", which has the Service URI "dvb://channel_17", see figure 4. Thus the user selects the related link and the browser launches "dvb://channel_17". The "dvb://" denotes that the browser 34 should go to the SNS 31 to retrieve the tuning parameters of the requested service, i.e., Channel 17. Thus, the browser calls the SNS 31 with the function variable "channel_17". The SNS retrieves the Tuning Parameters for "channel_17" from the entry "Channel 17" and returns them to the browser. The browser then sends this information to the tuner module 36 of the STB, which tunes the TV to the requested channel, i.e., Channel 17.

In this way, a user browsing an Internet home page can begin watching a particular TV programme, i.e., tune to a desired channel, simply by selecting a link on a Web site.

The parameters supplied to the tuner module also include start and stop times for the requested TV programme. If the programme is active at the moment the user selects the link, it is immediately displayed. However, if it is scheduled for a later time, this information is returned and the application prompts the user whether it is to be recorded. If the answer is yes, the STB instructs a VCR or other recording device of this fact and the VCR will begin recording the programme, just as if the user had programmed it in the usual way by means of a remote control or the like.

An advantage of the method and the system according to the invention is that people writing web pages need not to consider what networks viewers reading the web pages have access to. In that way, extensive TV guides may be compiled containing information which can be used by different groups of people, i.e., both people having analogue TV sets with enhanced Internet features and those having digital receivers.

In some cases, information can be transferred directly from the SNS 31 to the tuner module 36. This is denoted by a broken line in figure 4. For example, when the user request a currently accessible programme, the SNS can send the relevant tuning information directly to the tuner module without going through the web browser 34. This is more efficient and puts less load on the browser.

Sometimes a user selects a link to a programme not available to the user equipment, i.e., the Service Name of which is not in the SNS database. In that case, the browser returns a message like "service not available" or the like, informing the user of this fact.

Preferred embodiments of the invention have been described. It is realised that these can be varied within the scope of the appended claims. Thus, DVB compatible receivers have been shown. It is realised that the receivers are not limited to that kind but can be of any suitable kind for receiving analogue or digital information according to one or more standards.

A method of solving service ambiguity has been described wherein a network is chosen depending on the current network. Alternatively, tuning parameters for the service that most recently was used can be returned.

In an alternative embodiment (not shown), the SNS is simply a database residing in a receiver.

In yet an alternative embodiment, shown in figure 5, the SNS 31 resides in a centralised server 30 on the provider site 20. In this case the SNS 31 is accessed by the receivers at the user sites via the data network 10, see figure 1. Normally, TCP/IP is then used for communication when receivers provided in user terminals are connected to the provider site via the Internet.

In the described embodiments, a STB has been used. The person skilled in the art realises that equivalent equipment can be used, such as a personal computer, possibly with a TV card installed. In case of a computer, programmes can be recorded on the hard disk thereof.

## Claims

1. A method of supplying a receiver (30) with tuning information for provided services,
**characterised by** the following steps:
- compiling a database (31) comprising the following information items:
- a plurality of service identifiers (SI) identifying the provided services; and
- a plurality of sets of tuning parameters (TP), each of which sets is associated with a respective one of said plurality of service identifiers;
- retrieving a set of tuning parameters for a requested service by accessing said database through one of said plurality of service identifiers; and
- using said retrieved tuning parameters for tuning said receiver (30).

2. A method according to claim 1, wherein said database is compiled by a remote terminal (20), and the step of retrieving a set of tuning parameters comprises accessing the database through a data network (10), preferably the Internet.

3. A method according to claim 1 or 2, wherein the step of retrieving a set of tuning parameters comprises the step of selecting a service identifier by means of a web browser.

4. A method according to any of claims 1-3, wherein the step of compiling the database comprises the additional step of downloading the database as a file to the receiver, preferably as an HTML file.

5. A method according to any of claims 1-4, wherein
- said database comprises at least two identical service identifiers (SI), and
- wherein the step of retrieving a set of tuning parameters comprises the additional step of selecting one of said at least two identical service identifiers (SI) in dependence on to which network the receiver is currently tuned.

6. A method according to any of claims 1-4, wherein
- said database comprises at least two identical service identifiers (SI), and
- wherein the step of retrieving a set of tuning parameters comprises the additional step of selecting the most recently used of said at least two identical service identifiers (SI).

7. A method according to any of the preceding claims, wherein the step of using said retrieved tuning parameters comprises the step of transferring the tuning parameters from said database (31) directly to said receiver.

8. A method according to any of claims 1-7, wherein said database is compiled in a Set Top Box.

9. A method according to any of the preceding claims, wherein the step of compiling the database comprises a channel search.

10. A method according to any of the preceding claims, wherein said service identifiers relate to a Digital Video Broadcasting system.

11. A method according to any of the preceding claims, wherein said set of tuning parameters (TP) comprises any of the following items: frequency, forward error correction, symbol rate, and packet identifier.

12. A communication network comprising:
- at least one service provider system (20);
- at least one subscriber terminal (30) arranged to receive and process information from said at least one service provider system;
**characterised by**
- a database comprising the following information items:
- a plurality of service identifiers (SI) identifying services provided by said at least one service provider system; and
- a plurality of sets of tuning parameters (TP), each of which sets is associated with a respective one of said plurality of service identifiers;
- wherein said subscriber terminal (30) is arranged to be tuned to a requested service by accessing said database through the service identifier of the requested service and retrieving tuning parameters associated with the requested service.

13. A network according to claim 12, wherein said database is provided at a terminal (20) different from said at least one subscriber terminal (30), and said at least one subscriber terminal is arranged to access the database through a data network (10), preferably the Internet.

14. A network according to any of claims 12 and 13, wherein said at least subscriber terminal is arranged to access said database (31) by means of a web browser.

15. A network according to any of claims 12-14, wherein the database is arranged to be downloaded to said at least one subscriber terminal as a data file, preferably as-an HTML file.

16. A network according to any of claims 12-15, wherein
- said database comprises at least two identical service identifiers (SI), and
- wherein the subscriber terminal is arranged to select one of said at least two identical service identifiers (SI) in dependence on to which network the receiver is currently tuned.

17. A network according to any of claims 12-15, wherein
- said database comprises at least two identical service identifiers (SI), and
- wherein the subscriber terminal is arranged to select the most recently used of said at least two identical service identifiers (SI).

18. A network according to any of claims 12-17, wherein said subscriber terminal comprises a Set Top Box.

19. A network according to any of claims 12 and 15-18, wherein the step of compiling the database comprises a channel search.

20. A network according to any of claims 12-19, wherein said service identifiers relate to a Digital Video Broadcasting system.

21. A network according to any of claims 12-20, wherein said set of tuning parameters (TP) comprises any of the following items: frequency, forward error correction, symbol rate, and packet identifier.

22. A subscriber terminal in a communication network,
**characterised in that**
it is arranged to store a database comprising the following information items:
- a plurality of service identifiers (SI) identifying services provided by a service provider systems; and
- a plurality of sets of tuning parameters (TP), each of which sets is associated with a respective one of said plurality of service identifiers;
- wherein said subscriber terminal (30) is arranged to be tuned to a requested service by accessing said database through the service identifier of the requested service and retrieving tuning parameters associated with the requested service.

23. A terminal according to claim 22, wherein said database is provided at a terminal (20) different from said at least one subscriber terminal (30), and said at least one subscriber terminal is arranged to access the database through a data network (10), preferably the Internet.

24. A terminal according to any of claims 22 and 23, wherein said at least subscriber terminal is arranged to access said database (31) by means of a web browser.

25. A terminal according to any of claims 22-24, wherein the database is arranged to be downloaded to said at least one subscriber terminal as a data file, preferably as an HTML file.

26. A terminal according to any of claims 22-25, wherein
- said database comprises at least two identical service identifiers (SI), and
- wherein the subscriber terminal is arranged to select one of said at least two identical service identifiers (SI) in dependence on to which network the receiver is currently tuned.

27. A terminal according to any of claims 22-25, wherein
- said database comprises at least two identical service identifiers (SI), and
- wherein the subscriber terminal is arranged to select the most recently used of said at least two identical service identifiers (SI).

28. A terminal according to any of claims 22-27, wherein said subscriber terminal comprises a Set Top Box.

29. A terminal according to any of claims 22 and 25-28, wherein the step of compiling the database comprises a channel search.

30. A terminal according to any of claims 22-29, wherein said service identifiers relate to a Digital Video Broadcasting system.

31. A terminal according to any of claims 22-30, wherein said set of tuning parameters (TP) comprises any of the following items: frequency, forward error correction, symbol rate, and packet identifier.

32. A computer program product directly loadable into the internal memory of a digital computer connected to a communication network, to which network providers of digital services are connected, said computer program product comprising software code portions for performing the following steps:
- compiling a database (31) comprising the following information items:
- a plurality of service identifiers (SI) identifying the provided services; and
- a plurality of sets of tuning parameters (TP), each of which sets is associated with a respective one of said plurality of service identifiers;
- retrieving a set of tuning parameters for a requested service by accessing said database through one of said plurality of service identifiers; and
- using said retrieved tuning parameters for tuning said receiver (30).
